# EUROPEAN PATENT APPLICATION

(11) **EP 3 598 889 A1**
(43) Date of publication of application: **29.01.2020**
(21) Application number: 19188605.0
(22) Date of filing: 26.07.2019
(51) Int. Cl.: A01G 9/029, B65D 85/52

(54) **A PLANT ASSEMBLY, A CONTAINER, AN AREA OF GROUND, A BREEDING SYSTEM, A ROOTED PLANT ASSEMBLY, A SUBSTRATE AND METHODS**

(30) Priority: 27.07.2018 NL 2021405; 20.11.2018 NL 2022028
(71) Applicant: Safeway Holland B.V., 3141 KP Maassluis (NL)
(72) Inventor: Dijkstra, Gerrit, 3141 KP Maassluis (NL)
(74) Representative: V.O.

(57) **Abstract**

The invention relates to a container carrying a rooted plant having a root structure. The container further contains an amount of hydrogel such that at least a portion of the root structure or at least a portion of a substrate penetrated by the root structure is submerged into the hydrogel. Preferably, a bottom of the substrate penetrated by the root structure is dipped into the amount of hydrogel.

## Description

The invention relates to a plant assembly, comprising a seed received in a substrate or a rooted plant having a root structure optionally penetrating a substrate.

Rooted plants are typically supported by a substrate being penetrated by said root structures, such as rooting plugs or other plugs. Rooting plugs are used for cultivating plants. A rooting plug is made from a substrate including organic and/or non-organic material for cultivation of a plant. Typically, a rooting plug has a cylindrical shape, and has a bottom, a side wall and a top.

A container carrying a rooted plant can be implemented as a plant pot or a cell from multiple cells in a tray.

During transport and/or storage of plants it may occur that the rooting plugs run out of moisture, thus deteriorating the quality and status of the plants.

Traditionally, capillary cords or tubes have been used for moistening plant material. However, it appears that such cords or tubes usually function temporarily only due to a crystallization process induced by fertilizer material in the water.

It is an object of the invention to provide a plant assembly meeting the disadvantages identified above. It is also an object of the invention to provide a plant assembly preserving the quality of plants better, also during transport and/or storage. Thereto, according to an aspect of the invention, the assembly comprises an amount of hydrogel such that at least a portion of the root structure or at least a portion of a substrate is in direct fluid communication with the hydrogel.

By providing an amount of hydrogel that is in direct fluid communication with the substrate or the root structure itself a water buffer is created having a minimal flow resistance towards the rooting structure of the plant or the seed thereby vitalizing the plant also during relatively long periods wherein no water is added to the plant assembly. Further a crystallization process is counteracted.

Preferably, a bottom of a substrate receiving the seed or penetrated by a root structure or at least a portion of the root structure of the plant is dipped into the amount of hydrogel such that water stored in the hydrogel may flow directly to the substrate with minimal flow resistance.

Preferably, the amount of hydrogel includes nutrients and/or other additives.

The substrate can be implemented as a rooting plug or a substance of natural particles such as coconut fibre, peat and/or bark without bind agent. Further, the plant assembly can be carried by a container such as a pot. However, as an alternative, the plant assembly can be received in a cavity provided in an area of ground.

The invention also relates to a breeding system comprising a multiple number of containers each carrying a plant assembly.

Further, the invention relates to a method for cultivating plant ma terial.

The invention also relates to a method for moistening a plant, comprising the steps of providing a rooted plant having a root structure penetrating a substrate and pouring an amount of hydrogel onto the substrate, in order to counteract that the rooted plant is dried out. Thereto, a breeding system, comprising a container for carrying a plant assembly can be provided comprising a single or a multiple number of nozzles for periodically pouring an amount of hydrogel onto the plant assembly. Preferably, the step of pouring an amount of hydrogel is controlled such that an outflow of water from the substrate is minimized. Again, the amount of hydrogel may include nutrients and/or other additives.

The invention relates to a rooted plant assembly comprising a substrate and a root plant having a root structure penetrating the substrate, further comprising an amount of hydrogel poured onto the substrate.

In addition, the invention relates to a substrate for growing plant material, wherein the substrate is mixed with an amount of hydrogel, and to a method for preparing a substrate for growing plant material, as well as to a method of cultivating plant material.

Advantageous embodiments according to the invention are described in the appended claims.

It should be noted that the technical features and method steps described above may each on its own be embodied in a container or method, i.e. isolated from the context in which it is described, separate from other steps or features, or in combination with only a number of the other features or steps or described in the context in which it is disclosed. Each of these features or steps may further be combined with any other feature or step disclosed, in any combination.

The invention will be further elucidated on the basis of non-limitative exemplary embodiments which are represented in a drawing. In the drawing:
Figure 1A shows a schematic cross sectional view of a container carrying a plant assembly according to a first embodiment of the invention, and
Figure 1B shows a schematic cross sectional view of a container carrying a plant assembly according to a second embodiment of the invention,
Figure 1C shows a schematic cross sectional view of a container carrying a plant assembly according to a third embodiment of the invention;
Figure 1D shows a schematic perspective view of a breeding system comprising a multiple number of containers shown in Fig. 1A;
Figure 2 shows a schematic cross sectional view of a plant assembly in a cavity provided in an area of ground according to a fourth embodiment of the invention;
Figure 3 shows a schematic cross sectional view of a plant assembly prior to insertion in a cavity provided in an area of ground according to a fifth embodiment of the invention;
Figure 4A shows a schematic cross sectional view of a seed received in a substrate inserted in a cavity provided in an area of ground according to a sixth embodiment of the invention;
Figure 4B shows a schematic cross sectional view of a rooted plant received in a substrate inserted in a cavity provided in an area of ground according to a sixth embodiment of the invention;
Figure 4C shows a schematic cross sectional view of a substrate according to an aspect of the invention;
Figure 5 shows a flow chart of a method according to a first aspect of the invention;
Figure 6 shows a flow chart of a method according to a second aspect of the invention, and
Figure 7 shows a flow chart of a method according to a third aspect of the invention.

The embodiments disclosed herein are shown as example only and should by no means be understood as limiting the scope of the claimed invention in any way. In this description and in the figures, the same or similar elements have the same or similar reference signs.

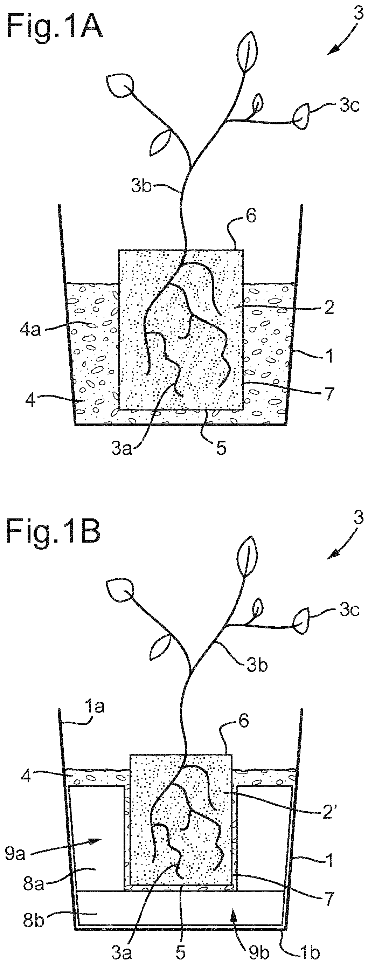

Figure 1A shows a schematic cross sectional view of a container 1 according to a first embodiment of the invention. The container 1 carries a plant assembly comprising a rooted plant 3. The plant 3 has a rooting structure 3a, a stem 3b and leaves 3c. Further, a rooting plug 2 is provided made from a substrate material including organic and/or non-organic material for cultivation of a plant 3. The rooting structure 3a of the plant 3 penetrates the rooting plug 2. The plant assembly also comprises an amount of hydrogel 4 such that at least a portion of the root structure or at least a portion of the substrate is in direct fluid communication with the hydrogel.

In the shown embodiment, the container 1 contains the amount of hydrogel 4 such that at least a portion of the rooting plug 2 is submerged into the hydrogel 4. The hydrogel 4 can include a hydrogel powder and/or a hydrogel fluid, but may also include granular shaped particles. After adding water to hydrogel powder, e.g. an amount of circa 0.1 liter water to circa 0.5 gram hydrogel powder, a hydrogel fluid can be formed. Depending on the type of hydrogel powder and a desired viscosity, another weight percentage of the hydrogel powder can be applied per volume unity of water. Generally, a viscosity of the hydrogel fluid decreases after adding more water. After adding water to hydrogel particles, said hydrogel granules 4a may swell up and absorb a major part or all water droplets, thus storing water in a solid form.

The hydrogel may comprise a first polymeric material having polyacrylic acid, and a second polymeric material having a polyglycol other than polyethylene glycol, and one or more species having a vinyl functionality, as disclosed in US 9 850 379 B2.

Upon preparing the container, a hydrogel fluid can be poured into the container. Then, the hydrogel fluid can be formed by pre-mixing hydrogel powder with water e.g. to a pre-defined viscosity. Alternatively, water is added after the container is partially filled with hydrogel powder. If desired, either hydrogel powder or water, or both, can be added to hydrogel fluid that is already present in the container. Similarly, a process of mixing hydrogel granulate particles with water can be carried out before or after adding the granulate particles to the container.

The hydrogel 4 is in direct contact with the portion of the rooting plug 2 submerged into said hydrogel 4. Further, the hydrogel 4 may freely flow along an exterior surface 5, 7 of the rooting plug 2 submerged into said hydrogel 4.

The amount of hydrogel in the container is in direct fluid communication with the rooting plug 2 such that water in the hydrogel may flow directly, with minimal flow resistance, to an internal channel structure of the rooting plug 2, for moistening the rooting structure 3a of the plant 3. Also, the rooting structure 3a may grow into the amount of hydrogel 4. The amount of hydrogel 4 is freely located at the bottom of the container 1, such as a plant pot or cell of a tray. The amount of hydrogel 4 is not contained in a bag, pad or sandwich, but in direct contact with the rooting plug 2 without intermediate structure or materials such as a paper layer.

In the shown embodiment, a bottom 5 of the plug 2 is dipped into the amount of hydrogel 4. The level of hydrogel particles 4a can be located at or just above the bottom 5 of the plug 2, but also higher, e.g. halfway between a top 6 and the bottom 5 of the plug 2 or at another height between the top 6 and the bottom 5 of the plug 2, e.g. at circa 20%, circa 40%, circa 60%, circa 80% or even higher e.g. at circa 95% of the height of the plug 2. Also, the hydrogel level may be at the top 6 of the plug 2 or even above said plug top 6. In the latter case, the plug 2 is completely dipped or submerged into the amount of hydrogel 4.

The hydrogel 4 may include specific polymer material adapted to absorb water and optionally expand upon absorbing water, such as water absorbent or superabsorbent polymers, typically with an abundance of hydrophilic groups. The polymer may be water insoluble by chemical or physical cross-linking. As an example, the hydrogel may contain polyethylene oxide. However, also other polymers are applicable, e.g. polyacrylamide, polyacrylic acid, polyvinyl alcohol, polyvinylpyrolidone or acetylated, etherified or grafted celluloses. Also, other hydrogel compositions can be used. The hydrogel may include particulate hydrogel that may retain a high degree of rigidity at available degrees of swelling with water. Hydrogen particles or granules may have a size ranging between circa 100 microns to circa 1 cm in diameter. Preferably, the hydrogel is biodegradable.

Optionally, the amount of hydrogel includes nutrients and/or other additives to stimulate growth of the rooting structure 3a of the plant 3. However, the amount of hydrogel can be provided without nutrients.

During use, the amount of hydrogel 4 forms a water buffer for moistening the rooting structure 3a of the plant 3. As an example, 1 kg of dry polymer may store circa 3 to circa 20 liters of water.

Generally, rooting plugs 2 are made from a substrate material including organic and/or non-organic material for cultivation of a plant, especially a young plant or a seedling, e.g. a bromeliad, an anthurium or an orchid. The substrate material may be formed as a composition. Preferably, the composition and/or material is spongy and/or penetrable to growing roots. Such and other suitable substrate materials and/or compositions are known in the art. For example, the substrate material or composition may comprise organic fibres, e.g. coconut fibre, peat and/or bark. Here, the rooting plug 2 may comprise for instance a substrate composition including particles joined by a bind agent, such as a non-toxic and/or organic glue. The joined particles may e.g. comprise organic fibres and/or soil particles. However, the plug may also be implemented without the use of a bind agent. Preferably, at least a part of the substrate material of the rooting plug 2 is resilient.

The rooting plug 2 is integrally formed for cultivation of a plant, and has a mainly cylindrical shape. The plug 2 has a bottom 5, a top 6 and a side wall 7 forming the exterior surface of said plug 2. Although in the shown embodiment the plug 2 is substantially circular cylindrically-shaped, the plug ay have another cylindrical shape, such as a polygon or elliptic cylindrical shape, or may have a yet further cylindrical shape such as a cuboid or a prism. Generally, the plug body 3 has a disc shaped cross sectional profile, when seen in a top view. The side wall 5 defines the exterior contour of the disc. A variety of dimensions can be applied. As an example, the height of a rooting plug 2, from bottom to top, may be in a range from circa 1 cm to circa 50 cm, while a diameter or a cross sectional dimension through its axial center, e.g. between opposite locations on the plug side wall 5, may be in a range from circa 0.5 cm to circa 20 cm.

The rooting plug 2 may be slightly tapered in a direction towards the bottom 3. Said tapered shape may facilitate forming the rooting plug in and/or removing the rooting plug from a manufacturing mould. Besides, a tapered shape, especially a downwardly tapered shape, of the rooting plug may facilitate placement of the rooting plug into a receiving structure of a container such as a tray or pot. Alternatively, the rooting plug 2 has constant cross sectional dimensions, the plug 2 having a straight side wall.

The top 6 of the plug 2 can be provided with a cavity for receiving plant material such as a seed, a seedling or a rooting structure of a young plant.

Alternatively or additionally, the rooting plug 2 can be provided with an incision extending from a central cylinder axis to the side wall 5 and from the top 4 to the bottom 3. Then, the plug body 3 can be deformable from an open state wherein two incision surfaces are remote from each other, for receiving plant material, to a closed state wherein the two incision surfaces mainly abut each other, for accommodating the received plant material.

Figure 1B shows a schematic cross sectional view of a container 1 carrying a plant assembly according to a second embodiment of the invention. Here, the rooting plug 2 has been replaced by another plug 2' made from bark, also having a bottom 5, a top 6 and a side wall 7 forming the exterior surface of said ground plug 2'. Similar to the rooting plug 2 in Fig. 1A, the bark plug 2' may contain further organic and/or non-organic material for cultivation of a plant 3. Also the bark plug 2' is penetrated by the rooting structure 3a of the plant 3.

Generally, the container 1 may carry a rooted plant 3 supported by a substrate that is penetrated by a rooting structure 3a of the rooted plant 3. The substrate can be implemented as a rooting plug, another plug, or a composition, such as ground, including organic and/or non-organic material for cultivation of a plant.

The container 1 shown in Fig. 1B further carries a spacer 8 located between an inner surface 1a of the container 1 and an exterior surface 5, 7 of the bark plug 2', for stabilizing a position of the plant 3. The spacer 8 may include a rigid frame or rigid frame portions such as a wire work or netting. Further, the spacer 8 may include wall segments enclosing an interior volume, such as a disk shaped volume, e.g. for locating at the bottom 1b of the container 1, or an annular shaped volume, e.g. for locating at the side wall 1a of the container 1. The spacer is placed in a first intermediate space 9a between the side wall 7 of the bark plug 2' and the interior side wall 1a of the container 1, and/or in a second intermediate space 9b between the bottom 5 of the bark plug 2' and a bottom 1b of the container 1. The spacer shown in Fig. 1B includes a side wall spacer 8a located in the first intermediate space 9a, as well as a bottom spacer 8b located in the second intermediate space 9b. The side wall spacer 8a and the bottom spacer 8b can be implemented as separate elements or can be integrated a single piece. Further, either the side wall spacer 8a and/or the bottom spacer 8b can be formed from multiple elements. It is noted that the spacer may be formed without the side wall spacer 7a or the bottom spacer 8b. The spacer 8 can be penetrable for root structures 3a.

By applying the spacer 8 described above, the bark plug 2' can be secured in the container, stabilizing the plant both in height and radial position in the container 1, also after a period of time when the hydrogel may have dropped to a lower level.

It is noted that the above described spacer 8 can not only be applied in combination with a bark plug 2', but also in combination with a rooting plug 2 is described referring to Fig. 1A.

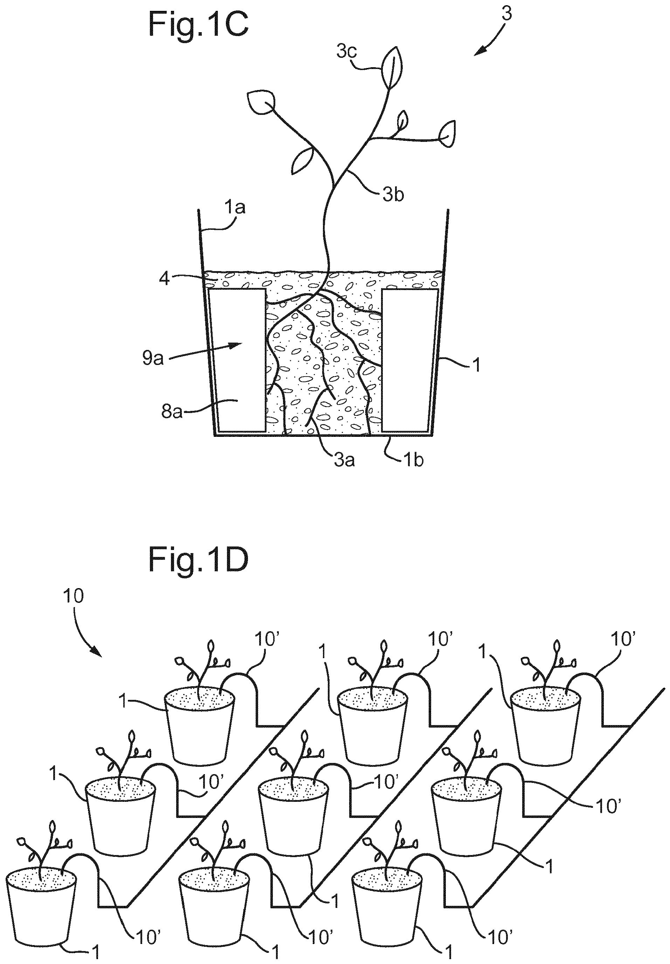

Figure 1C shows a schematic cross sectional view of a container 1 carrying a plant assembly according to a third embodiment of the invention. Here, at least a portion of the root structure 3a is directly submerged in the hydrogel 4. The root structure does not penetrate any substrate but is in direct contact with the hydrogel 4. In the embodiment shown in Fig. 1C, the spacer 8 merely includes a side wall spacer 8a. Here, the plant assembly comprises a root plant without a substrate.

In the embodiments shown in Fig. 1A-C, the plant assembly comprises a rooted plant having a root structure optionally penetrating a substrate, and an amount of hydrogel. It is noted, however, that the plant assembly may comprises, as alternative to a rooted plant, a seed or a multiple number of seeds received in a substrate.

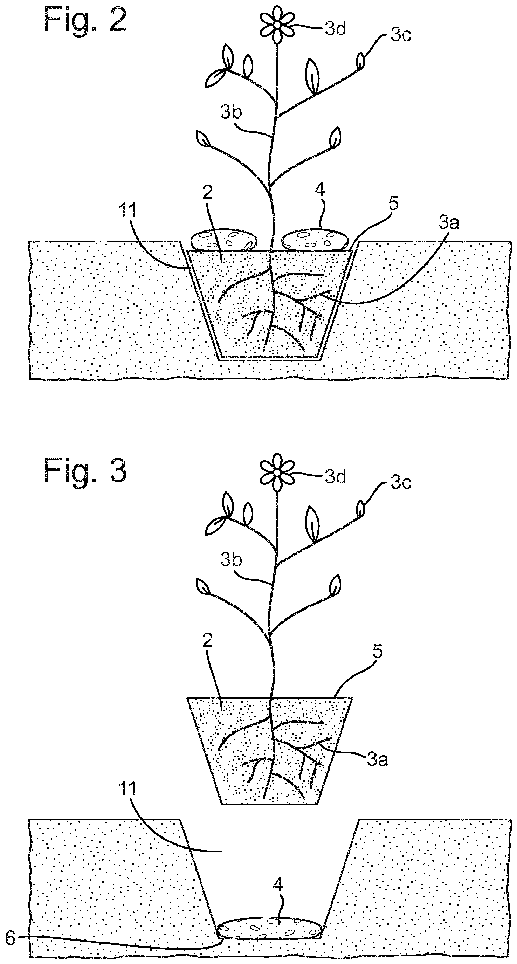

Further, the plant assembly can be carried by a container such as a pot. However, as an alternative, the plant assembly can be received in a cavity provided in an area of ground as described in more detail referring to Fig. 2, 3, 4A and 4B.
It is noted that a container carrying a plant assembly, or an area of ground having a cavity receiving a plant assembly may be provided with a single or a multiple number of nozzles for periodically pouring an amount of hydrogel onto the plant assembly.

Fig. 1D shows a schematic perspective view of a breeding system 10 comprising a multiple number of containers 1 each carrying a plant assembly, in the shown embodiment a substrate and a rooted plant having a root structure penetrating the substrate. The breeding system 10 also comprises a multiple number of nozzles 10' for periodically pouring an amount of hydrogel or water onto the respective plant assemblies. It is noted that the breeding system may, alternatively, comprises an area of ground provided with cavities receiving respective plant assemblies, further comprising nozzles for pouring an amount of hydrogel or water onto the respective plant assemblies.

Figure 2 shows a schematic cross sectional view of a plant assembly in a cavity provided in an area of ground according to a fourth embodiment of the invention. Here, an area of ground has a cavity 11 that has been formed in a natural process such as erosion or has been formed by machine or human interaction, e.g. by digging. The cavity 11 receives a plant assembly including a rooted plant 3 having a root structure 3a penetrating a substrate 2 that can be implemented as a rooting plug or a substance of natural particles such as coconut fibre, peat and/or bark without bind agent. On top of the substrate 2 an amount of hydrogel 4 has been added for moistening the root structure 3a of the plant 3. The amount of hydrogel may include nutrients and/or other additives.

It is noted that, generally, in a process of cultivating plant material, a step of adding an amount of hydrogel in a container or cavity can be performed prior to or after a step of inserting the seed or root structure of the plant into the container or the cavity, respectively.

Figure 3 shows a schematic cross sectional view of a plant assembly prior to insertion in a cavity provided in an area of ground according to a fifth embodiment of the invention. Here, the amount of hydrogel is added to the cavity 11 prior to inserting the substrate containing the root structure 3a of the plant 3 into the cavity 11 of the area of ground. It appears that the amount of hydrogel may remain on the bottom of the cavity 11 without being flown downwardly into the ground.

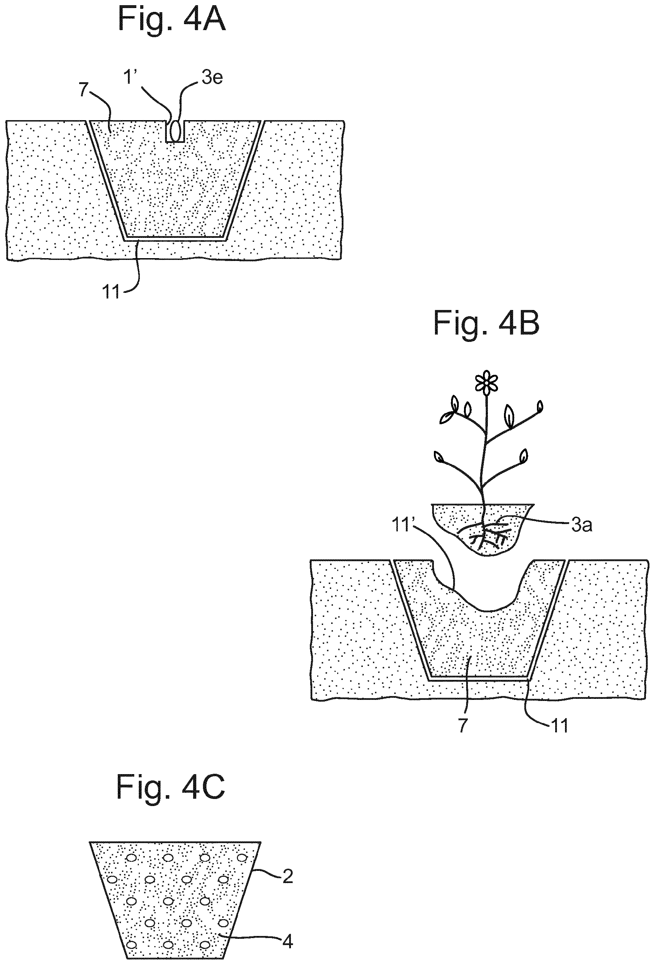

Figure 4A shows a schematic cross sectional view of a seed received in a substrate inserted in a cavity provided in an area of ground according to a sixth embodiment of the invention. Here, a seed 3e is received in a groove 1' made in a substrate 7 that is received in a ground cavity 11.

Figure 4B shows a schematic cross sectional view of a rooted plant received in a substrate inserted in a cavity provided in an area of ground according to a sixth embodiment of the invention. Here, further substrate material 7 is fed into the cavity 11 to completely fill the cavity 11 receiving the substrate that is penetrated by the root structure 3a of the plant 3.

Figure 4C shows a schematic cross sectional view of a substrate 2 according to an aspect of the invention. The substrate 2 is arranged for growing plant material. Here, the substrate 2 can be formed as a rooting plug or a substance of natural particles such as coconut fibre, peat and/or bark without bind agent, or ground particles. Further, the substrate 2 is mixed with an amount of hydrogel 4. In the shown embodiment, the amount of hydrogel includes hydrogel particles 4 that are more or less uniformly distributed or scattered in the substrate volume. In principle, however, the amount of hydrogel may have another distribution, e.g. including a relatively high concentration of hydrogel particles in the center and/or bottom of the substrate 2.

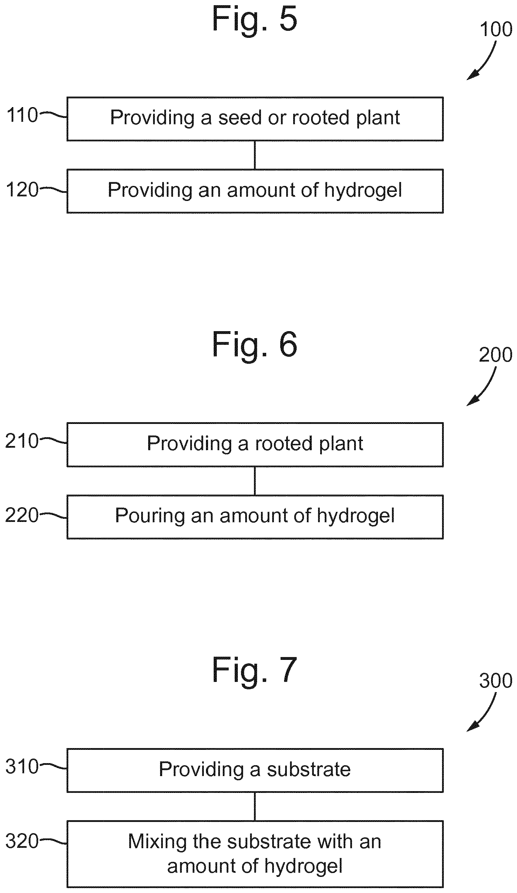

Figure 5 shows a flow chart of a method 100 according to a first embodiment of the invention. The method 100 is used for cultivating plant material, and comprises a step of providing 110 a seed received in a substrate or a rooted plant having a root structure optionally penetrating a substrate, and a step of providing 120 an amount of hydrogel such that at least a portion of the root structure or at least a portion of the substrate is in direct fluid communication with the hydrogel.

The method may further comprise the steps of providing a container or an area of ground provided with a cavity; partially filling the container or the cavity, respectively, with an amount of hydrogel, and inserting the seed or root structure of the plant into the container or the cavity, respectively.

The step of partially filling the container or the cavity may be performed prior to performing the step of inserting the seed or the root structure of the plant into the container or the cavity, respectively. Alternatively, the step of partially filling the container or the cavity is performed after performing the step of inserting the seed or the root structure of the plant into the container or the cavity, respectively.

The step of partially filling the container with an amount of hydrogel may include filling the container with a hydrogel powder and subsequently adding water to the powder, thereby obtaining a hydrogel fluid. Alternatively, the hydrogel powder can be pre-mixed with water before filling the container with a hydrogel fluid. Further, the step of partially filling the container may include adding hydrogel granules to the container, either pre-mixed with water or mixed with water after filing the container with said granules.

Preferably, the inserting step includes a step of dipping a bottom 5 of the substrate penetrated by the root structure into the amount of hydrogel 4.

As indicated above, a step of partially filling the container with an amount of hydrogel can be carried out prior to the step of inserting the substrate or root structure in the container such that at least a portion of the substrate or the root structure contacts the hydrogel. However, in principle, the inserting step and the filling step can be interchanged. Then, the substrate or root structure is inserted in the container prior to at least partially filling the container with an amount of hydrogel such that at least a portion of the substrate or root structure contacts the hydrogel. As an example, a bark plug or rooting plug can be received in a spacer described above, and the assembly can subsequently be put in the container. After inserting the assembly, the amount of hydrogel can be poured into the container, in order to control a desired level of hydrogel in the container already carrying the plug and spacer. Also in case no spacer is applied, the substrate can be inserted in the container prior to filling the container with the hydrogel.

Figure 6 shows a flow chart of a method 200 according to a second aspect of the invention. The method 200 is used for moistening a plant, and comprises a step of providing 210 a rooted plant having a root structure penetrating a substrate, and a step of pouring 220 an amount of hydrogel onto the substrate.

Advantageously, the amount of hydrogel may include nutrients and/or other additives.

Preferably, the step of pouring is performed after a humidity of the substrate has dropped below a pre-defined level, e.g. for counteracting that the plant is dried out. However, the step of pouring may be initiated by detection of another state, e.g. that a temperature is above a pre-defined level. Further, the step of pouring an amount of hydrogel can advantageously be controlled such that an outflow of water from the substrate is minimized, thereby reducing any water loss or outflow of additives such as nutrients, e.g. to the environment. On the other hand, in specific situations, an overflow of hydrogel may be applied, e.g. if any outflow is completely fed back. The nutrients or other additives may also remain in the amount of hydrogel, even in the case of an overflow of water or hydrogel. Then, the nutrients or other additives may stay in the substrate, not flowing away. As a result, any drain of nutrients or other additives is counteracted, while all nutrients or other additives are disposable for the plant, in principle, after the root structure reaches the location where the amount of hydrogel including the nutrients or other additives are located. Preferably, the pouring step is periodically performed, e.g. for extending the plant's life. The substrate receiving the amount of hydrogel can be contained in a container or can be located elsewhere, e.g. in a cavity in an area of ground. The amount of hydrogel is preferably added in the vicinity of a plant stem, and can be evenly distributed in the circumferential direction around the stem.

Accordingly, a rooted plant assembly can be provided comprising a substrate and a rooted plant having a root structure penetrating the substrate, further comprising an amount of hydrogel poured onto the substrate, preferably including nutrients or other additives.

Figure 7 shows a flow chart of a method 300 according to a third aspect of the invention. The method 300 is used for preparing a substrate for growing plant material, and comprises a step of providing 310 a substrate for growing plant material, and a step of mixing 320 the substrate with an amount of hydrogel, e.g. in a more or less uniform distribution. Again, the amount of hydrogel may include nutrients or other additives.

Accordingly, a substrate may be provided for growing plant material, wherein the substrate is mixed with an amount of hydrogel. The substrate can be formed as a rooting plug or another pug made from a substrate material including organic and/or non-organic material for cultivation of a plant. The substrate can be formed by ground particles.

Further, a method of cultivating plant material may be provided, comprising the steps of providing a substrate for growing plant material as indicated above, wherein the substrate is mixed with an amount of hydrogel, and inserting a seed or root structure of a plant into the substrate.

Accordingly, a rooted plant may be provided having a root structure penetrating a substrate described above, i.e. mixed with an amount of hydrogel preferably including nutrients or other additives.

The above method may further comprise a step of inserting the substrate into a container or into a cavity in an area of ground, prior to or after inserting the seed or root structure of a plant into the substrate. The method may further include a step of feeding further substrate material into the container or cavity, after inserting the substrate into the container or cavity, respectively. As an example, ground particles may be added into the container or cavity.

Accordingly, a rooted plant may be provided wherein the substrate is contained in a container, or is located on another location, e.g. in a cavity provided in an area of ground.

The invention is not restricted to the embodiments described above. It will be understood that many variants are possible.

It is noted that, optionally, water can be added to the hydrogel after a period of time when the level of the hydrogel in the container has dropped to a lower level.

These and other variants will be apparent to the person skilled in the art and are considered to fall within the scope of the invention as formulated by the following claims. For the purpose of clarity and a concise description features are described herein as part of the same or separate embodiments. However, it will be appreciated that the scope of the invention may include embodiments having combinations of all or some of the features described.

It is noted that the present disclosure also relates to a plant assembly, a container, an area of ground, a breeding system, a method for cultivating plant material, a method for moistening a plant, a rooted plant assembly, a substrate for growing plant material, a method of preparing a substrate for growing plant material assembly, a method of cultivating plant material and a rooted plant according to the following clauses 1-41.
Clause 1. A plant assembly, comprising a seed received in a substrate or a rooted plant having a root structure optionally penetrating a substrate, the plant assembly further comprising an amount of hydrogel such that at least a portion of the root structure or at least a portion of the substrate is in direct fluid communication with the hydrogel.
Clause 2. A plant assembly according to clause 1,wherein at least a portion of the root structure or at least a portion of a substrate penetrated by the root structure is submerged into the hydrogel.
Clause 3. A plant assembly according to clause 1 or 2, wherein the hydrogel contains a hydrogel powder, a hydrogel fluid and/or hydrogel granulate particles.
Clause 4. A plant assembly according to any of the preceding clauses, wherein the hydrogel freely flows along an exterior surface of the at least a portion of the root structure or along the at least a portion of the substrate penetrated by the root structure.
Clause 5. A plant assembly according to any of the preceding clauses, wherein the amount of hydrogel includes nutrients and/or other additives.
Clause 6. A plant assembly according to any of the preceding clauses, comprising a substrate penetrated by the root structure of the plant, wherein the substrate is a rooting plug or another plug made from a substrate material including organic and/or non-organic material for cultivation of a plant.
Clause 7. A plant assembly according to clause 6, wherein the substrate material comprises organic fibres such as coconut fibre, peat and/or bark. Clause 8. A plant assembly according to clause 6 or 7, wherein the plug comprises a substrate composition including particles joined by a bind agent.
Clause 9. A plant assembly according to any of the preceding clauses 1-5, wherein the at least a portion of the root structure is in direct contact with the hydrogel.
Clause 10. A plant assembly according to any of the preceding clauses, wherein the amount of hydrogel is water swellable.
Clause 11. A plant assembly according to any of the preceding clauses, wherein water in the amount of hydrogel is in direct fluid communication with the at least a portion of the root structure or the at least a portion of a substrate penetrated by the root structure.
Clause 12. A plant assembly according to any of the preceding clauses, wherein a bottom of the substrate penetrated by the root structure is dipped into the amount of hydrogel.
Clause 13. A plant assembly according to any of the preceding clauses, wherein the of hydrogel includes polymers.
Clause 14. A container carrying a plant assembly according to any of the preceding clauses 1-13.
Clause 15. A container according to clause 14, further carrying a spacer located between an inner surface of the container and an exterior surface of the substrate penetrated by the root structure.
Clause 16. An area of ground, comprising a cavity and a plant assembly according to any of the clauses 1-13 received in the cavity.
Clause 17. A breeding system, comprising a container according to clause 14 or 15, or an area according to clause 16, further comprising a nozzle for periodically pouring an amount of hydrogel onto the plant assembly.
Clause 18. A method for cultivating plant material, comprising the steps of:
   providing a seed received in a substrate or a rooted plant having a root structure optionally penetrating a substrate;
   providing an amount of hydrogel such that the seed, at least a portion of the root structure or at least a portion of the substrate is in direct fluid communication with the hydrogel.
Clause 19. A method according to clause 18, further comprising the steps of:
   providing a container or an area of ground provided with a cavity;
   partially filling the container or the cavity, respectively, with an amount of hydrogel, and
   inserting the seed or root structure of the plant into the container or the cavity, respectively.
Clause 20. A method according to clause 19, wherein the inserting step includes dipping a bottom of the substrate receiving the seed or penetrated by the root structure into the amount of hydrogel.
Clause 21. A method according to clause 19 or 20, wherein the step of partially filling the container or the cavity is performed prior to performing the step of inserting the seed or the root structure of the plant into the container or the cavity, respectively.
Clause 22. A method according to clause 19, wherein the step of partially filling the container or the cavity is performed after performing the step of inserting the seed or the root structure of the plant into the container or the cavity, respectively.
Clause 23. A method for moistening a plant, comprising the steps of:
   - providing a rooted plant having a root structure penetrating a substrate, and
   - pouring an amount of hydrogel onto the substrate.
Clause 24. A method according to clause 23, wherein the step of pouring is performed after a humidity of the substrate has dropped below a pre-defined level.
Clause 25. A method according to clause 23 or 24, wherein the step of pouring an amount of hydrogel is controlled such that an outflow of water from the substrate is minimized.
Clause 26. A method according to any of the preceding clauses 23-25, wherein the amount of hydrogel includes nutrients and/or other additives.
Clause 27. A method according to any of the preceding clauses 23-26, wherein the pouring step is periodically performed.
Clause 28. A method according to any of the preceding clauses 23-27, wherein the substrate is contained in a container or located in a cavity in an area of ground.
Clause 29. A rooted plant assembly comprising a substrate and a rooted plant having a root structure penetrating the substrate, further comprising an amount of hydrogel poured onto the substrate.
Clause 30. A substrate for growing plant material, wherein the substrate is mixed with an amount of hydrogel.
Clause 31. A substrate according to clause 30, wherein the amount of hydrogel includes nutrients and/or other additives.
Clause 32. A substrate according to clause 30 or 31, wherein the substrate is a rooting plug or another plug made from a substrate material including organic and/or non-organic material for cultivation of a plant.
Clause 33. A substrate according to clause 30, 31 or 32, wherein the substrate is formed by ground particles.
Clause 34. A method of preparing a substrate for growing plant material, comprising the steps of:
   - providing a substrate for growing plant material, and
   - mixing the substrate with an amount of hydrogel.
Clause 35. A method according to clause 34, wherein the amount of hydrogel includes nutrients and/or other additives.
Clause 36. A method of cultivating plant material, comprising the steps of:
   - providing a substrate according to any of the preceding clauses 30-33, and
   - inserting a seed or a root structure of a plant into the substrate.
Clause 37. A method according to clause 36, further comprising a step of inserting the substrate into a container or into a cavity in an area of ground, prior to or after inserting the seed or root structure of a plant into the substrate.
Clause 38. A method according to clause 37, further comprising a step of feeding further substrate material into the container or cavity, after inserting the substrate into the container or cavity, respectively. Clause 39. A rooted plant having a root structure penetrating a substrate according to any of the preceding clauses 30-33.
Clause 40. A rooted plant according to clause 39, wherein the substrate is contained in a container.
Clause 41. A rooted plant according to clause 39, wherein the substrate is located in a cavity provided in an area of ground.
   It is noted that the present disclosure further relates to a container carrying a rooted plant having a root structure and a method for cultivating plant material according to the following clauses 42-55.
Clause 42. A container carrying a rooted plant having a root structure, the container further containing an amount of hydrogel such that at least a portion of the root structure or at least a portion of a substrate penetrated by the root structure is submerged into the hydrogel.
Clause 43. A container according to clause 42, wherein the hydrogel contains a hydrogel powder, a hydrogel fluid and/or hydrogel granulate particles.
Clause 44. A container according to clause 42 or 43, wherein the hydrogel is in direct contact with the at least a portion of the root structure or with the at least a portion of the substrate penetrated by the root structure.
Clause 45. A container according to any of the preceding clauses 42-44, wherein the hydrogel freely flows along an exterior surface of the at least a portion of the root structure or along the at least a portion of the substrate penetrated by the root structure.
Clause 46. A container according to any of the preceding clauses 42-45, wherein the substrate penetrated by the root structure is a rooting plug or another plug made from a substrate material including organic and/or non-organic material for cultivation of a plant.
Clause 47. A container according to any of the preceding clauses 42-45, wherein the at least a portion of the root structure is directly submerged in the hydrogel.
Clause 48. A container according to any of the preceding clauses 42-46, further carrying a spacer located between an inner surface of the container and an exterior surface of the substrate penetrated by the root structure.
Clause 49. A container according to any of the preceding clauses 42-48, wherein the amount of hydrogel is water swellable.
Clause 50. A container according to any of the preceding clauses 42-49, wherein water in the amount of hydrogel is in direct fluid communication with the at least a portion of the root structure or the at least a portion of a substrate penetrated by the root structure.
Clause 51. A container according to any of the preceding clauses 42-50, wherein a bottom of the substrate penetrated by the root structure is dipped into the amount of hydrogel.
Clause 52. A container according to any of the preceding clauses 42-51, wherein the of hydrogel includes polymers.
Clause 53. A container according to any of the preceding clauses 42-52, wherein the amount of hydrogel includes nutrients.
Clause 54. A method for cultivating plant material, comprising the steps of:
   providing a rooted plant having a root structure;
   providing a container for containing the rooted plant;
   partially filling the container with an amount of hydrogel, and
   inserting the rooted plant in the container such that at least a portion of the root structure or at least a portion of a substrate penetrated by the root structure is submerged into the hydrogel.
Clause 55. A method according to clause 54, wherein the inserting step includes dipping a bottom of the substrate penetrated by the root structure into the amount of hydrogel.

## Claims

1. A plant assembly, comprising a seed received in a substrate or a rooted plant having a root structure penetrating a substrate, the plant assembly further comprising an amount of hydrogel, for example including polymers, such that at least a portion of the substrate is in direct fluid communication with the hydrogel, wherein at least a portion of a substrate penetrated by the root structure is submerged into the hydrogel.

2. A plant assembly according to claim 1, wherein the hydrogel contains a hydrogel powder, a hydrogel fluid and/or hydrogel granulate particles, the amount of hydrogel is water swellable and/or the amount of hydrogel includes nutrients and/or other additives.

3. A plant assembly according to any of the preceding claims, wherein the hydrogel freely flows along an exterior surface of the at least a portion of the root structure or along the at least a portion of the substrate penetrated by the root structure.

4. A plant assembly according to any of the preceding claims, comprising a substrate penetrated by the root structure of the plant, wherein the substrate is a rooting plug or another plug made from a substrate material including organic and/or non-organic material for cultivation of a plant, wherein the substrate material optionally comprises organic fibres such as coconut fibre, peat and/or bark and/or wherein the plug optionally comprises a substrate composition including particles joined by a bind agent.

5. A plant assembly according to any of the preceding claims 1-3, wherein the at least a portion of the root structure is in direct contact with the hydrogel.

6. A plant assembly according to any of the preceding claims, wherein water in the amount of hydrogel is in direct fluid communication with the at least a portion of the root structure or the at least a portion of a substrate penetrated by the root structure.

7. A plant assembly according to any of the preceding claims, wherein a bottom of the substrate penetrated by the root structure is dipped into the amount of hydrogel, and/or wherein an amount of hydrogel is poured onto the substrate.

8. A container carrying a plant assembly according to any of the preceding claims 1-7, optionally carrying a spacer located between an inner surface of the container and an exterior surface of the substrate penetrated by the root structure.

9. An area of ground, comprising a cavity and a plant assembly according to any of the claims 1-7 received in the cavity.

10. A breeding system, comprising a container according to claim 8, or an area according to claim 9, further comprising a nozzle for periodically pouring an amount of hydrogel onto the plant assembly.

11. A method for moistening a plant, comprising the steps of:
- providing a rooted plant having a root structure penetrating a substrate, and
- pouring an amount of hydrogel onto the substrate.

12. A method according to claim 12, wherein the step of pouring is performed periodically and/or after a humidity of the substrate has dropped below a pre-defined level.

13. A method according to claim 12 or 13, wherein the step of pouring an amount of hydrogel is controlled such that an outflow of water from the substrate is minimized.

14. A method according to any of the preceding claims 11-13, wherein the amount of hydrogel includes nutrients and/or other additives and/or wherein the substrate is contained in a container or located in a cavity in an area of ground.

15. A substrate for growing plant material, wherein the substrate is mixed with an amount of hydrogel,
wherein the substrate is a rooting plug or another plug made from a substrate material including organic and/or non-organic material for cultivation of a plant.
